# EUROPÄISCHE PATENTSCHRIFT

(11) **EP 2 545 340 B1**
(45) Veröffentlichungstag und Bekanntmachung des Hinweises auf die Patenterteilung: **13.12.2017**
(21) Anmeldenummer: 11711750.7
(22) Anmeldetag: 02.02.2011
(51) Int. Cl.: G01B 11/25

(54) **VERFAHREN UND VORRICHTUNG ZUR MESSUNG DER PROFILGEOMETRIE VON ZYLINDRISCHEN KÖRPERN**
METHOD AND APPARATUS FOR MEASUREMENT OF THE PROFILE GEOMETRY OF CYLINDRICAL BODIES
PROCÉDÉ ET DISPOSITIF SERVANT À MESURER LA GÉOMÉTRIE DU PROFIL DE CORPS CYLINDRIQUES

(30) Priorität: 11.03.2010 DE 102010011217
(43) Veröffentlichungstag der Anmeldung: 16.01.2013
(73) Patentinhaber: Salzgitter Mannesmann Line Pipe GmbH, 57074 Siegen (DE)
(72) Erfinder: DEPPE, Gerd-Joachim, 47809 Krefeld (DE); SCHÖNARTZ, Norbert, 47509 Rheurdt (DE); BRAUER, Holger, 45892 Gelsenkirchen (DE); WINKELS, Jörn, 59457 Werl (DE)
(74) Vertreter: Meissner, Peter E.
(86) Internationale Anmeldenummer: PCT/DE2011/000117
(87) Internationale Veröffentlichungsnummer: WO 2011/110144

(56) Entgegenhaltungen:
- WO-A1-96/30718
- DE-A1- 10 006 663
- DE-A1-102004 057 092
- DE-A1-102007 026 900
- JP-A- 57 144 404
- JP-A- 2003 148 936
- US-A- 4 741 621

## Beschreibung

Die Erfindung betrifft ein Verfahren zur Messung der Profilgeometrie von zylindrischen Körpern gemäß dem Oberbegriff des Patentanspruches 1 sowie eine Vorrichtung zur Durchführung des Verfahrens nach Anspruch 4. Die vorliegende Erfindung betrifft insbesondere eine optische Profilmessung, die berührungslos nach dem Lichtschnitt-Verfahren als einem an sich bekannten zweidimensionalen Triangulations-Verfahren erfolgt.

Hierbei kann bei einer vorhandenen Relativbewegung zwischen Sensor und Messobjekt durch Zusammenfügen aus den sukzessive aufgenommenen zweidimensionalen "Profilschnitten" ein dreidimensionales "Gesamtprofil" des Messobjektes, wie z. B. eines Rohres, aufgebaut werden.

Die im Rahmen der vorliegenden Erfindung betrachtete Profilmessung basiert in ihrer eindimensionalen Form auf der bekannten Punkttriangulation, bei der ein Laser und ein zeilenförmiger positionsempfindlicher Detektor den Triangulations-Sensor bilden. Laserstrahl-Achse und optische Achse des Detektors spannen eine im folgenden als "Normalebene" bezeichnete Ebene auf und stehen im Triangulations-Winkel zueinander. Üblicherweise stellt der Abstand des Messobjektes vom Sensor in Richtung des Laserstrahls die Messgröße dar. Bekannt ist dieses Verfahren z. B. aus der DE 40 37 383 A1.

Die zweidimensionale Erweiterung der Punkttriangulation ist Gegenstand der vorliegenden Patentanmeldung. Bei diesem ebenfalls grundsätzlich bekannten Lichtschnitt-Verfahren ist der punktförmige Laserstrahl durch einen Laserstrahl-Fächer und der eindimensionale, zeilenförmige Detektor durch einen zweidimensionalen flächigen Detektor ersetzt.

Bei den bekannten Verfahren erfolgt die Erweiterung jeweils orthogonal und symmetrisch zu der oben als Normalebene bezeichneten Ebene. Das jeweilige Messfeld auf dem Messobjekt wird mit Hilfe eines Objektivs auf dem Detektor abgebildet, wobei Objektiv und Detektor dabei eine zweidimensional arbeitende Flächenbild-Kamera bilden.

Der Laserstrahl-Fächer wird dabei typischerweise durch eine vor dem punktförmigen Laserstrahl-Austritt angebrachte diffraktive Optik generiert und erzeugt so auf dem Messobjekt eine als "Lichtschnitt-Linie" bezeichnete Linie.

Bei Anwendung des beschriebenen Verfahrens auf zylindrische Messobjekte, zum Beispiel - aber nicht zwingend - Rohre, ist die Lichtschnitt-Linie typischerweise orthogonal zur Rohrachse ausgerichtet. Bei axialem Längstransport der Rohre oder entsprechender Bewegung des Sensors kann mit fortlaufender Messung, wie eingangs bereits erwähnt, ein dreidimensionales Profil der Rohrgeometrie aufgenommen werden.

Bei Anwendung der Lichtschnitt-Messung in der beschriebenen Art und Anordnung wird ein charakteristischer, durch die Geometrie des Messobjektes bedingter Nachteil deutlich, der eine exakte Bestimmung der Profilgeometrie in Teilen sogar unmöglich macht.

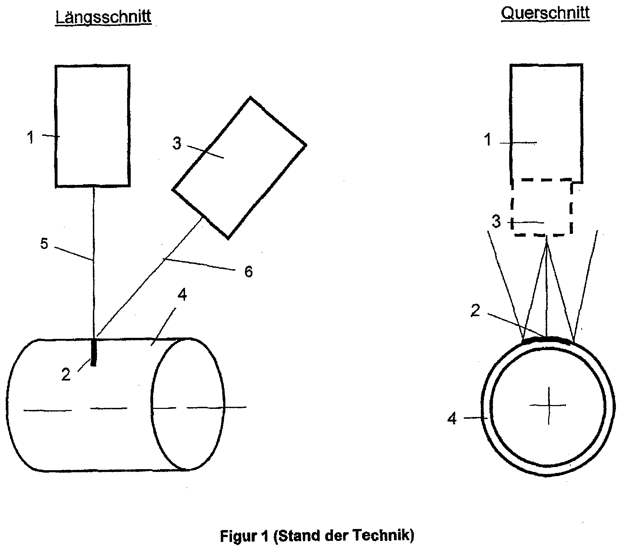

In Figur 1 ist dazu der Stand der Technik bei der zweidimensionalen Lichtschnitt-Messung eines zylindrischen Rohres schematisch dargestellt.

Diese Anordnung entspricht der der Anordnung zum Messen des Durchmessers von stabförmigen Artikeln der Tabak verarbeitenden Industrie, wie sie aus der DE 102004057092A1 bekannt ist. Die Messung nutzt eine Abbildung der von einem Laser 1 als projizierte Laserlinie 2 fächerförmig bestrahlten Oberfläche des Messobjektes 4 auf den als Kamera 3 ausgebildeten Detektor.

Das linke Teilbild zeigt schematisch die Ansicht als Längsschnitt und das rechte Teilbild als Querschnitt bezogen auf die Längsachse des Messobjektes 4. Die Lichtschnitt-Anordnung von Laser 1 und Kamera 3 sind dabei in der Ebene in Linie der Längsachse des Messobjektes angeordnet, wobei der Winkel zwischen der Achse des Laserstrahl-Fächers 5 des Lasers 1 und der optischen Achse 6 der Kamera 3 im Längsschnitt der Triangulations-Winkel ist.

Nachteilig bei dieser Anordnung ist, dass bei der Messung nur ein relativ geringer Teil der von der Objektoberfläche rückgestreuten Laserstrahl-Energie in die Kamera 3 zur Auswertung gelangt. Insbesondere bei Durchführung einer dynamischen Messung ist insbesondere die Energie pro Belichtungszeit-Intervall relevant, was insbesondere bei einer schnellen Relativbewegung zwischen Kamera 3 und Messobjekt 4 und einer damit notwendigerweise kurzen Belichtungszeit kritisch ist und eine dreidimensionale Profilmessung sogar unmöglich machen kann.

Dieser Nachteil der Messung mit dem bekannten Verfahren bei Anwendung auf die Zylindergeometrie wird verstärkt durch die Winkelverhältnisse aufgrund der fächerförmigen Aufweitung des Laserstrahls 2 und wirkt sich daher besonders in den Randbereichen des Messfeldes aus, insbesondere dort wo durch die Krümmung der Oberfläche ein noch geringerer Anteil an rückgestreuter Laserstrahl-Energie von der Kamera 3 aufgefangen wird.

Nachteilig ist der Abfall der Intensität in den Randbereichen der abgebildeten Lichtschnitt-Linie auch für das Signal/Rausch-Verhältnis bei der Auswertung der Messsignale und damit letztlich für die Messgenauigkeit der Signale.

Eine Erhöhung der Ausgangsleistung des Lasers bringt i. a. zwar eine Verbesserung des Signal/Rausch-Verhältnisses, ist aber mit dem Nachteil eines erhöhten Aufwandes für Laser und Laserschutz verbunden.

Eine prinzipiell ebenso mögliche Erhöhung der Belichtungszeit der Kamera verbietet sich bei schneller Relativbewegung zwischen Sensor und Messobjekt wegen der zunehmenden Bewegungsunschärfe.

Grundsätzlich wäre bei Vorliegen einer typischen Streucharakteristik der Messobjektoberfläche auch ein steilerer Betrachtungswinkel der Kamera (d. h. ein steilerer Triangulations-Winkel) denkbar, dieser würde jedoch insbesondere die Messauflösung verringern.

Bei den zuvor genannten drei Maßnahmen würde das Problem der ungleichmäßigen Intensitätsverteilung bei der Bildaufnahme jedoch nicht gelöst; bei ausreichender Randintensität bestünde sogar die Gefahr der Überstrahlung im Zentralbereich. EP1662226 offenbart ein Verfahren und eine Vorrichtung zur Messung der Profilgeometrie von zylindrischen Körpern als Messobjekte (10) mittels zweidimensionalem Lichtschnitt-Verfahren, bei dem mittels mindestens eines Lasers (12) eine fächerförmige Laserlinie (Fig. 1-3) als Lichtschnitt-Linie auf der Oberfläche des Körpers abgebildet und die von der Oberfläche des Körpers reflektierten Strahlen von mindestens einer Flächenbild-Kamera (17) aufgenommen werden, wobei der Laser (12) und die Kamera (17) in einem Triangulations-Winkel (Absatz [0012]) in der Ebene in Linie der Zylinderachse angeordnet sind (Fig. 1-3) und die Messwerte anschließend einer Auswerteeinheit zur Darstellung der Profilgeometrie zugeführt werden (Anspruch 3). Der vorliegenden Erfindung liegt deshalb die Aufgabe zugrunde, ein einfach zu realisierendes Verfahren zur Messung der Profilgeometrie eines Messobjektes mittels zweidimensionalem Lichtschnitt-Verfahren von zylindrischen Körpern anzugeben, mit dem die beschriebenen Nachteile überwunden werden. Eine weitere Aufgabe besteht darin, eine entsprechende Vorrichtung anzugeben.

Diese Aufgabe wird nach dem Oberbegriff in Verbindung mit den kennzeichnenden Merkmalen der Ansprüche 1 und 4 gelöst. Vorteilhafte Weiterbildungen sind Gegenstand von Unteransprüchen.

Nach der Lehre der Erfindung wird zur Messung der Profilgeometrie der Laser aus der genannten Ebene um die Zylinderachse herausgeschwenkt, wobei der Winkel zur genannten Ebene so gewählt ist, dass die optische Achse der Flächenbildkamera bezogen auf die Oberfläche des Zylinders im Glanzwinkelbereich der reflektierten Strahlen liegt.

Bei der Erfindung werden durch eine neuartige räumliche Anordnung von Aufnahmekamera und Laserstrahl-Fächer unter Berücksichtigung der charakteristischen Geometrie des Messobjektes die beschriebenen Nachteile der bekannten Verfahren auf einfach zu realisierende Weise überwunden.

Die vorgeschlagene Neuerung wird hier für ein Messobjekt mit Zylindergeometrie beschrieben. Während bei den bekannten Ausführungen des Lichtschnitt-Verfahrens Laser und Kamera in der oben definierten Ebene in Linie der Zylinderachse angeordnet sind, wird bei der vorgeschlagenen Neuerung der Laser gezielt aus dieser Ebene um die Zylinderachse herausgeschwenkt, so dass der Laser die Oberfläche in einem Winkel beleuchtet.

Vorteilhaft sind dabei Laser und Kamera so angeordnet, dass der Aufnahmewinkel bezogen auf die Zylinderoberfläche im Glanzwinkelbereich für die Anordnung der Achse des Laserstrahl-Fächers und der optischen Achse der Aufnahmekamera liegen.

Der Glanzwinkel gibt allgemein dabei den Winkel an, bei dem matte nicht ideal spiegelnde Oberflächen in einem bestimmten Winkel eine erhöhte Reflexion des Lichts zeigen, d. h. sie »glänzen«. Gegenüber der bekannten Messtechnik wird dieser Effekt nun genutzt, um durch gezieltes Verschwenken des Lasers aus der genannten Ebene heraus die Reflexion der Laserstrahlen in die Kamera auch von den kritischen Randbereichen des Messobjektes zu intensivieren.

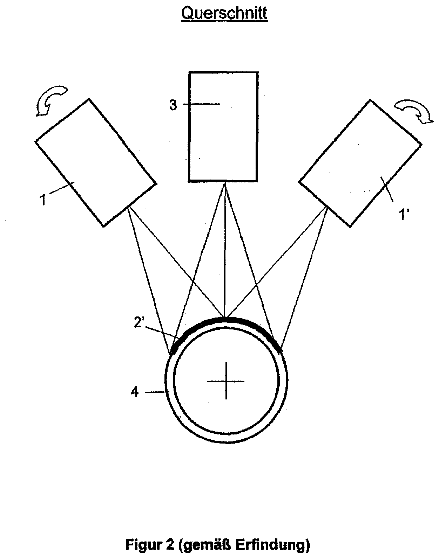

Bei einem Messfeld symmetrisch zur genannten Ebene als typischem Anwendungsfall werden vorteilhaft zwei Laser in symmetrischer Anordnung verwendet **(****Figur** 2).

Bei gleicher Länge der Lichtschnitt-Linie auf dem Umfang des Zylinders erhält man aufgrund der vorgeschlagenen neuartigen Anordnung entsprechend der Querschnitts-Darstellung in **Figur** 2 einen vergrößerten Erfassungsbereich, d. h. Profil-Messbereich. Der Laser 1, 1' ist erfindungsgemäß aus der Ebene um die Zylinderachse herausgeschwenkt, wobei der Triangulations-Winkel (projiziert auf die genannte Ebene - und damit auch die Abstandsauflösung der Profilmessung - erhalten bleiben.

Bei Zusammensetzung einer durchgängigen Lichtschnitt-Linie aus zwei Anteilen der auf die Oberfläche des Messobjektes 4 projizierten Laserlinie 2' werden die beiden Anteile geradlinig zueinander ausgerichtet, wobei die von der Oberfläche reflektierten Strahlen von der zwischen den Lasern 1,1' angeordneten Kamera 3 aufgenommen und an eine hier nicht dargestellte Auswerteeinheit weitergeleitet werden.

Die Anordnung mit zwei Lasern zu beiden Seiten der genannten Ebene in der sich die Kamera befindet, erweist sich auch als vorteilhaft bei der Erweiterung auf eine Mehrkanal-Anordnung, mit der z. B. der gesamte Umfang des Zylinders aufgenommen werden kann. Zum Einsatz kommt eine gleiche Anzahl von Kameras und Laserstrahl-Fächern. Die notwendige Kanalzahl ergibt sich im Einzelfall aus dem Zusammenwirken von Reflektivität der Zylinderoberfläche, Laserleistung und (notwendiger) Belichtungszeit.

## Patentansprüche

1. Verfahren zur Messung der Profilgeometrie von zylindrischen Körpern als Messobjekte (4) mittels zweidimensionalem Lichtschnitt-Verfahren, bei dem mittels mindestens eines Lasers (1, 1') eine fächerförmige Laserlinie (2, 2') als Lichtschnitt-Linie auf der Oberfläche des Körpers abgebildet und die von der Oberfläche des Körpers reflektierten Strahlen von mindestens einer Flächenbild-Kamera (3) aufgenommen werden, wobei der mindestens ein Laser (1,1') und die Kamera (3) in einem Triangulations-Winkel *in einer* Ebene in Linie *der Zylinderlängsachse* angeordnet sind und die Messwerte anschließend einer Auswerteeinheit zur Darstellung der Profilgeometrie zugeführt werden,
**dadurch gekennzeichnet,**
**dass** zur Messung der Profilgeometrie der mindestens ein Laser
(1, 1') aus der genannten Ebene um die Zyinderachse herausgeschwenkt wird, wobei der Winkel zur genannten Ebene so gewählt ist, dass die optische Achse (6) der Flächenbild-Kamera (3) bezogen auf die Oberfläche des Zylinders im Glanzwinkelbereich der reflektierten Strahlen liegt.

2. Verfahren nach Anspruch 1
**dadurch gekennzeichnet,**
**dass** die Messung der Profilgeometrie des Messobjektes (4) mittels mehrerer über den Umfang des Messobjektes verteilter Laser (1, 1') erfolgt, deren fächerförmige Laserlinien (2, 2') sich auf einer Linie befinden und sich teilweise überdecken und die von der Oberfläche des Messobjektes reflektierten Laserstrahlen mittels der in den Räumen zwischen den Lasern angeordneten Kameras (3) detektiert werden.

3. Verfahren nach Anspruch 2
**dadurch gekennzeichnet,**
**dass** bei einer Umfangsmessung des Messobjektes (4) eine gleiche Anzahl an Lasern (1, 1') und Kameras (3) verwendet wird.

4. Vorrichtung zur Durchführung des Verfahrens nach einem der Ansprüche 1 - 3, bestehend aus mindestens einem eine fächerförmige Laserlinie (2) auf ein *zylindrisches* Messobjekt (4) projizierenden Laser (1, 1') und mindestens einer in einem Triangulations-Winkel dazu angeordneten Flächenbild-Kamera (3) zur Detektion der von der Oberfläche des Messobjektes (4) reflektierten Laserstrahlung, wobei der mindestens ein Laser (1, 1') und die Kamera (3) *in einer* Ebene in Linie *der Zylinderlängsachse* angeordnet sind und die Kamera (3) an eine Auswerteeinheit zur Darstellung der Profilgeometrie angeschlossen ist,
**dadurch gekennzeichnet,**
**dass**
Mittels zur Verschwenkung der Achse des Laserstrahl-Fächers (5) aus der genannten Ebene und zur Ausrichtung der Achse des Laserstrahl-Fächers (5) in einem von der orthogonalen abweichenden Winkel auf die Oberfläche des Messobjektes vorgesehen sind, so dass die optische Achse (6) der Flächenbild-Kamera (3) bezogen auf die Oberfläche des Zylinders im Glanzwinkelbereich der reflektierten Laserstrahlen liegt.

5. Vorrichtung nach Anspruch 4
**dadurch gekennzeichnet,**
**dass** für eine Profilgeometrie-Messung über den Umfang des Messobjektes (4) mehrere über den Umfang des Messobjektes verteilte Laser (1, 1') angeordnet sind, deren fächerförmige Laserlinien (2, 2') sich auf einer Linie befinden und sich teilweise überdecken und zur Detektion der von der Oberfläche des Messobjektes (4) reflektierten Laserstrahlen in den Räumen zwischen den Lasern (1, 1') Kameras (3) angeordnet sind.

6. Vorrichtung nach Anspruch 5
**dadurch gekennzeichnet,**
**dass** bei einer Umfangsmessung des Messobjektes (4) eine gleiche Anzahl an Lasern (1, 1') und Kameras (3) angeordnet ist.

## Claims

1. A process for measuring the profile geometry of cylindrical bodies as measurement objects (4) by means of a two-dimensional light section process, in which, by means of at least one laser (1, 1'), a fan-shaped laser line (2, 2') is imaged as a light section line on the surface of the body and the beams reflected by the surface of the body are captured by at least one surface image camera (3), wherein the at least one laser (1, 1') and the camera (3) are arranged at a triangulation angle in a plane in line with the longitudinal cylinder axis and the measurement values are subsequently supplied to an evaluating unit to represent the profile geometry,
**characterised in that**,
to measure the profile geometry, the at least one laser (1, 1') is pivoted out of the said plane about the cylinder axis, wherein the angle to the said plane is selected so that the optical axis of the surface image camera (3) in relation to the surface of the cylinder is located in the glancing angle range of the reflected beams.

2. The process according to Claim 1,
**characterised in that**
the measurement of the profile geometry of the measurement object (4) takes place by means of a plurality of lasers (1, 1') which are distributed over the circumference of the measurement object and whereof the fan-shaped laser lines (2, 2') are located on a line and partially overlap, and the laser beams reflected by the surface of the measurement object are detected by means of the cameras (3) arranged in the spaces between the lasers.

3. The process according to Claim 2,
**characterised in that**,
an equal number of lasers (1, 1') and cameras (3) is used in a circumferential measurement of the measurement object (4).

4. A device for carrying out the process according to one of Claims 1 - 3, comprising at least one laser (1, 1') projecting a fan-shaped laser line (2) onto a cylindrical measurement object (4) and at least one surface image camera (3) arranged at a triangulation angle to said laser for detecting the laser beam reflected by the surface of the measurement object (4), wherein the at least one laser (1, 1') and the camera (3) are arranged in a plane in line with the longitudinal cylinder axis and the camera (3) is connected to an evaluating unit for representing the profile geometry,
**characterised in that**
means are provided for pivoting the axis of the laser beam fan (5) out of the said plane and for aligning the axis of the laser beam fan (5) with the surface of the measurement object at an angle deviating from the orthogonal, so that the optical axis (6) of the surface image camera (3) in relation to the surface of the cylinder is located in the glancing angle range of the reflected laser beams.

5. The device according to Claim 4,
**characterised in that**,
for a profile geometry measurement over the circumference of the measurement object (4), a plurality of lasers (1, 1') whereof the fan-shaped laser lines (2, 2') are located on a line and partially overlap are arranged distributed over the circumference of the measurement object, and cameras (3) are arranged in the spaces between the lasers (1, 1') for detecting the laser beams reflected by the surface of the measurement object (4).

6. The device according to Claim 5,
**characterised in that**
an equal number of lasers (1, 1') and cameras (3) is arranged for a circumferential measurement of the measurement object (4).

## Revendications

1. Procédé pour la mesure de la géométrie du profil de corps cylindriques à titre d'objets de mesure (4) au moyen d'une procédure à intersection de lumière bidimensionnelle, dans lequel, au moyen d'au moins un laser (1, 1') on forme l'image d'une ligne laser en forme d'éventail (2, 2') à titre de ligne d'intersection de lumière sur la surface du corps et les rayons réfléchis par la surface du corps sont reçus par au moins une caméra d'imagerie surfacique (3), dans lequel ledit au moins un laser (1, 1') et la caméra (3) sont agencés dans un angle de triangulation dans un plan dans la ligne de l'axe longitudinal du cylindre et les valeurs de mesure sont ensuite amenées à une unité d'évaluation pour la représentation de la géométrie du profil,
**caractérisé en ce que**
pour mesurer la géométrie du profil, ledit au moins un laser (1, 1') est pivoté hors du plan précité autour de l'axe du cylindre, et l'angle par rapport au plan précité est ainsi sélectionné que l'axe optique (6) de la caméra d'imagerie surfacique (3) est situé, par référence à la surface du cylindre, dans la plage angulaire de brillance des rayons réfléchis.

2. Procédé selon la revendication 1,
**caractérisé en ce que** la mesure de la géométrie du profil de l'objet de mesure (4) a lieu au moyen de plusieurs lasers (1, 1') répartis sur la périphérie de l'objet de mesure, dont les lignes laser en forme d'éventail (2, 2') se trouvent sur une ligne et se recouvrent partiellement, et les rayons lasers réfléchis par la surface de l'objet de mesure sont détectés au moyen des caméras (3) agencées dans les espaces entre les lasers.

3. Procédé selon la revendication 2,
**caractérisé en ce que** lors d'une mesure périphérique de l'objet de mesure (4) on utilise un nombre égal de lasers (1, 1') et de caméras (3).

4. Appareil pour la mise en oeuvre du procédé selon l'une des revendications 1 à 3, constitué d'au moins un laser (1, 1') qui projette une ligne laser en forme d'éventail (2) sur un objet de mesure cylindrique (4), et d'au moins une caméra d'imagerie surfacique (3) agencée à un angle de triangulation par rapport au laser, pour la détection du rayonnement laser réfléchi depuis la surface de l'objet de mesure (4), dans lequel ledit au moins un laser (1, 1') et la caméra (3) sont agencés dans un plan dans la ligne de l'axe longitudinal du cylindre et la caméra (3) est branchée à une unité d'évaluation pour représenter la géométrie du profil,
**caractérisé en ce que**
il est prévu des moyens pour faire pivoter l'axe de l'éventail du rayon laser (5) hors du plan précité et pour l'alignement de l'axe de l'éventail du rayon laser (5) dans un angle différent d'un angle orthogonal sur la surface de l'objet de mesure de sorte que l'axe optique (6) de la caméra d'imagerie surfacique (3) est situé, par référence à la surface du cylindre, dans la plage angulaire de brillance des rayons lasers réfléchis.

5. Appareil selon la revendication 4,
**caractérisé en ce que**
pour une mesure de géométrie de profil sur la périphérie de l'objet de mesure (4) plusieurs lasers (1, 1') sont agencés répartis sur la périphérie de l'objet de mesure, dont les lignes laser en forme d'éventail (2, 2') se trouvent sur une ligne et se recouvrent partiellement et, pour la détection des rayons lasers réfléchis depuis la surface de l'objet de mesure (4), des caméras (3) sont agencées dans les espaces entre les lasers (1, 1').

6. Appareil selon la revendication 5.
**caractérisé en ce que** lors d'une mesure périphérique de l'objet de mesure (4) il est prévu un nombre égal de lasers (1, 1') et de caméras (3).
